# EUROPEAN PATENT APPLICATION

(11) **EP 4 458 453 A1**
(43) Date of publication of application: **06.11.2024**
(21) Application number: 22915977.7
(22) Date of filing: 23.12.2022
(51) Int. Cl.: B01D 53/06, B01D 53/44, B01D 53/72, F23G 7/06

(54) **GAS TREATMENT SYSTEM AND GAS TREATMENT METHOD**

(30) Priority: 27.12.2021 JP 2021213183
(71) Applicant: TOYOBO MC Corporation, Osaka 530-0001 (JP)
(72) Inventor: KOHNO Daiki, Osaka-shi, Osaka 530-0001 (JP); ONO Kazuyuki, Osaka-shi, Osaka 530-0001 (JP)
(74) Representative: Vossius & Partner Patentanwälte Rechtsanwälte mbB
(86) International application number: PCT/JP2022/047755
(87) International publication number: WO 2023/127754

(57) **Abstract**

The present invention is directed to a gas treatment system that purifies gas to be treated which contains an organic substance. The gas treatment system includes a concentration apparatus including an adsorptive element, the concentration apparatus bringing introduced gas to be treated in contact with the adsorptive element to adsorb the organic substance and emitting resultant gas as purified treated gas, and desorbing the organic substance from the adsorptive element with introduced heated gas to emit resultant gas as concentrated gas containing the organic substance, a combustion apparatus including combustion means, the combustion apparatus having introduced concentrated gas burnt by the combustion means and emitting resultant gas as combustion outlet gas, utility sensing means that senses an amount of utility used by the combustion means as motive power, and gas flow volume control means that adjusts a flow volume of heated gas to be introduced to the concentration apparatus and/or a flow volume of concentrated gas to be introduced to the combustion apparatus such that the amount of utility sensed by the utility sensing means is within a setting range.

## Description

### TECHNICAL FIELD

The present invention relates to a gas treatment system and the like that remove an organic substance from gas to be treated which contains the organic substance and emit purified treated gas.

### BACKGROUND ART

In order to remove an organic substance from gas to be treated, a system that brings gas to be treated in contact with an adsorption rotor to adsorb the organic substance and emits treated gas obtained by purification of gas to be treated and desorbs the adsorbed organic substance from the adsorption rotor with heated gas smaller in flow volume than gas to be treated and emits concentrated gas high in concentration of the organic substance at a flow volume smaller than that of gas to be treated has conventionally been known. Some of such systems are constituted of a concentration apparatus that continuously purifies and concentrates gas to be treated by repeatedly performing adsorption and desorption and a combustion apparatus (a direct combustion apparatus or the like) that makes the organic substance harmless by combustion and decomposition by oxidation of concentrated gas. A system that senses an outlet temperature of a combustion apparatus and adjusts a flow volume in desorption in the concentration apparatus or a cycle of repetition of adsorption and desorption depending on the outlet temperature in order to suppress energy consumption required in operations has also been known as such a gas treatment system (for example, see PTLs 1 to 3).

Conventional gas treatment systems disclosed in PTLs 1 to 3 apply such a phenomenon that an amount of combustion heat and a combustion outlet temperature after combustion increase depending on a concentration of an organic substance contained in concentrated gas.

### CITATION LIST

### PATENT LITERATURE

PTL 1: Publication of Japanese Patent Application "Japanese Patent Laying-Open No. 10-000330"
PTL 2: Publication of Japanese Patent Application "Japanese Patent Laying-Open No. 10-128047"
PTL 3: Publication of Japanese Patent Application "Japanese Patent Laying-Open No. 10-128048"

### SUMMARY OF INVENTION

### TECHNICAL PROBLEM

In various factories, research facilities, and the like which are sources of generation of gas to be treated, however, a concentration of an organic substance in gas to be treated is varied variously depending on operation conditions. Therefore, in a conventional system, control may be unable to keep up with abrupt variation in concentration of the organic substance in gas to be treated.

When the concentration of the organic substance in gas to be treated highly frequently increases and decreases, control keeps up also with such variation in the conventional system, and hence a frequency of opening and closing of a damper associated with a flow volume in desorption or a cycle of repetition of adsorption and desorption or a rotation speed of a fan or an adsorption rotor is frequency varied, which tends to lead to shorter lifetime of a device.

The present invention was made to aim at further improvement of the conventional system. An object of the present invention is to provide a gas treatment system and the like capable of achieving reduction in amount of energy consumption and treating gas to be treated more safely in a more stable manner while treatment performance is maintained even when variation in concentration of an organic substance is more abrupt than a design value or when a frequency of increase and decrease in concentration is high in the system.

### SOLUTION TO PROBLEM

The present inventors conducted dedicated studies to solve the problem above, and finally completed the present invention. Specifically, the present invention is as below.
1. A gas treatment system that purifies gas to be treated which contains an organic substance includes a concentration apparatus that brings introduced gas to be treated in contact with an adsorptive material to adsorb the organic substance and emits resultant gas as purified treated gas and desorbs the organic substance from the adsorptive material with introduced heated gas and emits resultant gas as concentrated gas containing the organic substance, a combustion apparatus including combustion means, the combustion apparatus having introduced concentrated gas burnt by the combustion means and emitting resultant gas as combustion outlet gas, utility sensing means that senses an amount of utility used by the combustion means as motive power, and gas flow volume control means that adjusts a flow volume of heated gas to be introduced to the concentration apparatus and/or a flow volume of concentrated gas to be introduced to the combustion apparatus such that the amount of utility sensed by the utility sensing means is within a setting range.
2. In the gas treatment system described in 1 above, the gas flow volume control means lowers stepwise the flow volume of heated gas and/or the flow volume of concentrated gas when the amount of utility sensed by the utility sensing means exceeds the setting range and instantaneously increases the flow volume of heated gas and/or the flow volume of concentrated gas when the amount of utility becomes lower than the setting range.
3. In the gas treatment system described in 1 or 2 above, the gas flow volume control means compares an average value of amounts of utility sensed by the utility sensing means for a certain period with the setting range of the amount of utility and adjusts the flow volume.
4. In the gas treatment system described in any one of 1 to 3 above, the adsorptive material makes up an adsorption rotor which is divided into an adsorption portion where adsorption is performed and a concentration portion where desorption is performed, and the adsorptive material repeats transition between the adsorption portion and the concentration portion by rotating, and the gas treatment system further includes concentrated gas temperature sensing means that senses a temperature of concentrated gas emitted from the concentration apparatus and rotation speed control means that adjusts a rotation speed of the adsorption rotor such that the temperature sensed by the concentrated gas temperature sensing means is within a setting range.
5. In the gas treatment system described in 4 above, the rotation speed control means lowers stepwise the rotation speed of the adsorption rotor when the temperature sensed by the concentrated gas temperature sensing means becomes lower than the setting range and increases stepwise the rotation speed of the adsorption rotor when the temperature of concentrated gas exceeds the setting range.
6. In the gas treatment system described in 4 or 5 above, the rotation speed control means compares an average value of temperatures of concentrated gas sensed by the concentrated gas temperature sensing means for a certain period with the setting range of the temperature of concentrated gas and adjusts the rotation speed.
7. In a gas treatment method including adsorption treatment to adsorb an organic substance contained in gas to be treated with an adsorptive material and emit treated gas, desorption treatment to desorb the organic substance from the adsorptive material with heated gas and emit resultant gas as concentrated gas, and combustion treatment to burn concentrated gas, an amount of utility used in the combustion treatment is sensed and a flow volume of heated gas to be used for the desorption treatment and/or a flow volume of concentrated gas to be supplied for the combustion treatment are adjusted such that the sensed amount of utility is within a setting range.

### ADVANTAGEOUS EFFECTS OF INVENTION

The gas treatment system in the present invention adjusts the flow volume of heated gas to be introduced to the concentration apparatus and/or the flow volume of concentrated gas to be introduced to the combustion apparatus such that the amount of utility used by combustion means is within the setting range. Therefore, even when variation in concentration of an organic substance in gas to be treated is more abrupt than a design value or when a frequency of increase and decrease in concentration is high, an amount of energy consumption can be reduced and gas can be treated more safely in a more stable manner while treatment performance is maintained.

### BRIEF DESCRIPTION OF DRAWINGS

Fig. 1 is a schematic construction diagram of a gas treatment system in the present embodiment.
Fig. 2 is another construction diagram of a concentration apparatus.
Fig. 3 is a structure diagram of an adsorption unit included in another construction of the concentration apparatus.

### DESCRIPTION OF EMBODIMENTS

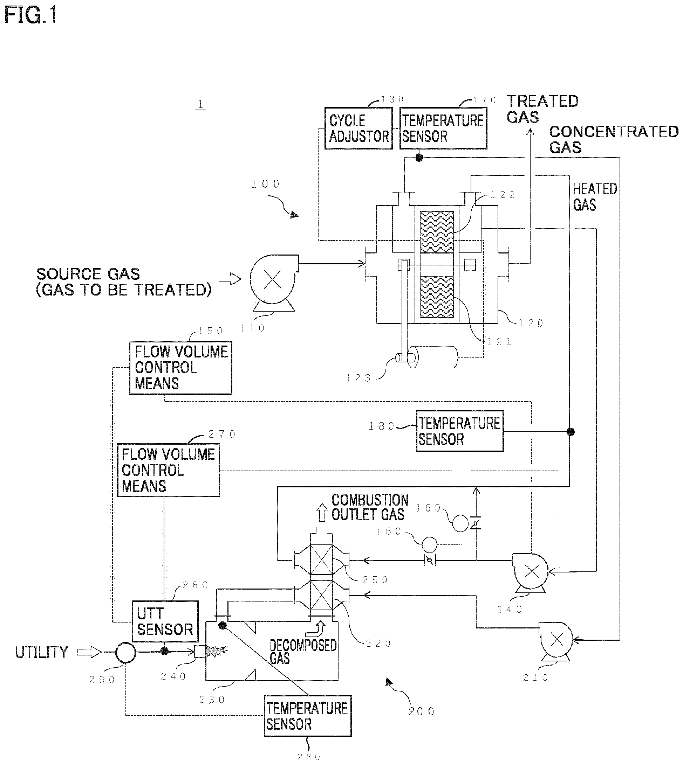

One embodiment of the present invention will be described based on Fig. 1. Fig. 1 is a schematic construction diagram of a gas treatment system 1 including a concentration apparatus 100 and a combustion apparatus 200. In Fig. 1, an arrow represents a flow of gas. Gas to be treated which contains an organic substance is sent to concentration apparatus 100, and treated gas (purified gas) obtained by removal of the organic substance and concentrated gas are emitted from concentration apparatus 100. Concentrated gas is sent to combustion apparatus 200 and emitted as combustion outlet gas in which the organic substance has been decomposed by oxidation.

Concentration apparatus 100 includes gas-to-be-treated supply means 110, an adsorption rotor 120, a cycle adjustor 130, heated gas supply means 140, heated gas flow volume control means 150, heated gas temperature control means 160, a concentrated gas temperature sensor 170, and a heated gas temperature sensor 180. Adsorption rotor 120 is divided into an adsorption portion 121 and a desorption portion 122, and constructed to be rotated by rotational movement means 123.

Gas to be treated is introduced from gas-to-be-treated supply means 110 to adsorption portion 121 of adsorption rotor 120 composed of an adsorptive material. Exemplary gas-to-be-treated supply means 110 is a fan or the like. An organic substance in introduced gas to be treated is adsorbed by the adsorptive material in adsorption portion 121. Therefore, after gas to be treated passes through adsorption portion 121, it is emitted from concentration apparatus 100 as purified treated gas from which the organic substance has been removed.

Some of emitted treated gas is sent to a later-described heat exchanger 250 by heated gas supply means 140 and becomes heated gas higher in temperature than treated gas. The temperature of heated gas is measured by heated gas temperature sensor 180 and adjusted by heated gas temperature control means 160 to a setting temperature.

Heated gas set to the setting temperature is introduced to desorption portion 122 of adsorption rotor 120. The organic substance that has adsorbed to the adsorptive material in desorption portion 122 is desorbed by heat of introduced heated gas, and emitted from concentration apparatus 100 as concentrated gas higher in concentration of the organic substance than gas to be treated.

Adsorption rotor 120 is in a shape of a disc in Fig. 1. Adsorption rotor 120 is constructed to be able to continuously repeat movement of the adsorptive material present around an area in the adsorption portion to an area in the desorption portion and movement of the adsorptive material present in the area in the desorption portion to the area in the adsorption portion, as a result of rotation by rotational movement means 123.

The adsorptive material included in adsorption rotor 120 is composed to contain at least one selected from the group consisting of activated carbon, activated carbon fibers, and zeolite. Suitably, the adsorptive material is used in a form of a granule, a granular body, a honeycomb, a pleated filter, or the like. Further preferred forms include a honeycomb structure containing zeolite or a pleated filter containing activated carbon fibers.

Exemplary heated gas supply means 140 is a fan or the like. Though heated gas temperature sensor 180 is not particularly limited, a thermocouple, a temperature measurement resistive body, or the like can be employed. Though heated gas temperature control means 160 is not particularly limited, exemplary heated gas temperature control means is means that is provided with two adjustment dampers to adjust a ratio of an amount of gas to be received in heat exchanger 250 based on a degree of opening of each adjustment damper to set a setting temperature as shown in Fig. 1. Though not shown, heating means such as a heater to set a setting temperature may be provided in a stage preceding heated gas temperature sensor 180.

Combustion apparatus 200 is an apparatus for decomposition by oxidation of an organic substance by burning concentrated gas emitted from concentration apparatus 100. Combustion apparatus 200 includes concentrated gas supply means 210, a heat exchanger 220, a combustion furnace 230, combustion means 240, heat exchanger 250, a utility sensor 260, concentrated gas flow volume control means 270, a combustion furnace temperature sensor 280, and utility supply means 290.

Concentrated gas emitted from concentration apparatus 100 is introduced to heat exchanger 220 by concentrated gas supply means 210, heated by exchange of heat with decomposed gas which will be described later, and thereafter introduced to combustion furnace 230. Exemplary concentrated gas supply means 210 is a fan or the like. Combustion means 240 is an apparatus that heats the inside of combustion furnace 230 with the use of utility supplied through utility supply means 290. Concentrated gas introduced to combustion furnace 230 is heated to a prescribed temperature so that an organic substance therein is decomposed by oxidation and resultant gas is emitted as decomposed gas. Decomposed gas passes through heat exchanger 220 and heat exchanger 250, and thereafter emitted as purified combustion outlet gas.

Heat exchanger 250 is a device for heating some of treated gas emitted from concentration apparatus 100, and has heat exchanged between treated gas and decomposed gas supplied from heated gas supply means 140. Treated gas is heated by heat exchanger 250, and becomes heated gas higher in temperature than treated gas.

Combustion furnace temperature sensor 280 is a device that senses a temperature in combustion furnace 230. Utility supply means 290 supplies necessary utility such that the temperature sensed by combustion furnace temperature sensor 280 attains to a setting temperature. Though combustion means 240 is not particularly limited, exemplary combustion means is a burner, a heater, or the like. When the burner is employed as combustion means 240, LPG or town gas is allocated as the utility, and when the heater is employed as combustion means 240, electricity or a heat medium is allocated as the utility.

A type of combustion apparatus 200 is not particularly limited. For example, a direct combustion apparatus that directly burns gas at a high temperature from 650 to 800°C to decompose an organic substance by oxidation, a catalyst combustion apparatus that uses a platinum catalyst or the like to cause a catalytic oxidation reaction of gas to decompose an organic substance by oxidation, a thermal storage direct combustion apparatus that economically achieves direct decomposition by oxidation of an organic substance while it uses a thermal storage body to recover heat, or a thermal storage catalyst combustion apparatus which uses a platinum catalyst or the like and a thermal storage body as being combined to efficiently cause a catalyst oxidation reaction of gas to decompose an organic substance by oxidation, or the like can be used. Such combustion apparatus 200 is used to burn concentrated gas and cause an oxidation reaction thereof to decompose an organic substance and make the organic substance harmless.

In gas treatment system 1, utility sensor 260 senses an amount of utility used by combustion means 240, and heated gas flow volume control means 150 adjusts the flow volume of heated gas and/or concentrated gas flow volume control means 270 adjusts the flow volume of concentrated gas such that an amount of utility is within a setting range. Specifically, when the sensed amount of utility exceeds the setting range, the flow volume of heated gas and/or concentrated gas is decreased stepwise until the amount of utility is within the setting range. With this control method, the concentration of the organic substance in concentrated gas decreases stepwise, and the amount of utility can be adjusted without causing thermal runaway. When the sensed amount of utility becomes lower than the setting range, on the other hand, the flow volume of heated gas and/or concentrated gas is instantaneously increased. When the amount of utility becomes lower than the setting range, the concentration of the organic substance in concentrated gas becomes higher than necessary and the inside of combustion apparatus 200 may attain to a temperature equal to or higher than a withstand temperature. Therefore, the flow volume of heated gas and/or concentrated gas is instantaneously increased to avoid such a situation. Though heated gas flow volume control means 150 and concentrated gas flow volume control means 270 are separately provided in Fig. 1, single gas flow volume control means that performs functions of both of them may be present.

An average of measurement values for a certain time period of the amount of utility sensed by utility sensor 260 is preferably used to make comparison with the setting range of the amount of utility and to determine whether or not to adjust the flow volume by means of heated gas flow volume control means 150 and/or concentrated gas flow volume control means 270, because abrupt variation in flow volume can be prevented by using the average of measurement values for the certain time period. Utility sensor 260 should only be selected as appropriate depending on a method of heating combustion means 240. When the burner is employed as combustion means 240, an LPG flowmeter or a town gas flowmeter is applicable, and when the heater is employed as combustion means 240, an ammeter or a heat medium flowmeter is applicable.

Heated gas flow volume control means 150 and concentrated gas flow volume control means 270 are not particularly limited either. When a fan is employed as each of heated gas supply means 140 and concentrated gas supply means 210, exemplary means is an apparatus that adjusts the number of rotations of a fan motor such as an inverter to adjust the flow volume.

In gas treatment system 1, together with adjustment of the flow volumes of heated gas and concentrated gas described above, preferably, concentrated gas temperature sensor 170 senses the temperature of concentrated gas emitted from concentration apparatus 100 and cycle adjustor 130 adjusts the number of rotations (repetition cycle) of adsorption rotor 120 such that the temperature is within the setting range. Specifically, when the temperature of the concentrated gas becomes equal to or lower than the setting range, rotational movement means 123 lowers stepwise the rotation speed of adsorption rotor 120 such that the number of rotations determined by cycle adjustor 130 is attained, and when the temperature of concentrated gas becomes equal to or higher than the setting range, rotational movement means 123 increases stepwise the rotation speed of adsorption rotor 120. With the temperature of concentrated gas being equal to or higher than a certain temperature, sufficient desorption of the organic substance from adsorption rotor 120 can be confirmed. A degree of desorption is dependent on the number of rotations (repetition cycle) of adsorption rotor 120 and the flow volume of heated gas. Decrease in flow volume of heated gas in adjustment to the amount of utility within the setting range as described above leads to insufficient desorption. Present adjustment rectifies this phenomenon. Proper balance between adsorption and desorption is secured by adjustment of the number of rotations of adsorption rotor 120.

Preferably, an average of measurement values for a certain time period of the temperature of concentrated gas sensed by concentrated gas temperature sensor 170 is used to make comparison with the setting range of the temperature of concentrated gas and determine whether or not to adjust the number of rotations of adsorption rotor 120 by means of cycle adjustor 130, because abrupt variation in rotation can be prevented by using the average of measurement values for the certain time period. Though concentrated gas temperature sensor 170 is not particularly limited, exemplary concentrated gas temperature sensor 170 is a thermocouple or the like.

Cycle adjustor 130 is not particularly limited either. When a motor is employed as rotational movement means 123, exemplary cycle adjustor 130 includes a device that adjusts the number of rotations of the motor such as an inverter.

With the use of gas treatment system 1 in the present embodiment described above, even when the amount of gas to be treated or the concentration of an organic substance in gas to be treated varies to a design value or smaller, energy consumption in combustion apparatus 200 can be suppressed. Even when the amount of gas to be treated or the concentration of an organic substance in gas to be treated varies to the design value or larger, operations can continue safely in a stable manner without deterioration of a member or the like of combustion apparatus 200 while treatment performance is maintained.

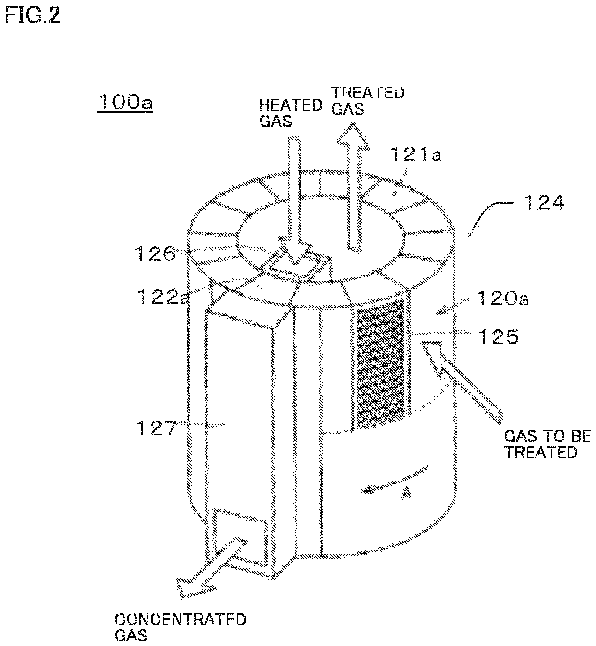

Fig. 2 is a schematic diagram showing a concentration apparatus 100a which is another exemplary concentration apparatus that can be used instead of concentration apparatus 100 in gas treatment system 100 in the present embodiment. Though concentration apparatus 100 shown in Fig. 1 includes adsorption rotor 120 in the shape of the disc, concentration apparatus 100a described with reference to Fig. 2 includes a cylindrical adsorption rotor 120a. Fig. 2 shows only adsorption rotor 120a equipped in concentration apparatus 100a and a constituent element arranged in the vicinity of adsorption rotor 120a, and does not show other constituent elements.

Concentration apparatus 100a shown in Fig. 2 includes adsorption rotor 120a having a cylindrical outer geometry. As shown in Fig. 2, adsorption rotor 120a is cylindrically constructed, for example, in such a manner that, with an adsorption unit 125 enclosed by a frame body 124 made of metal being defined as one unit, a plurality of adsorption units 125 are aligned in a circumferential direction to allow a radial flow of a fluid, and it is rotationally driven around an axis. In adsorption rotor 120a, at least one of the plurality of adsorption units 125 is used as an adsorption portion 121a and another at least one of the plurality of adsorption units 125 is used as a desorption portion 122a. Gas to be treated is introduced from a radially outer side to adsorption portion 121a of adsorption rotor 120a and treated gas is emitted toward a radially inner side and emitted toward one side or two sides of an axial direction. Heated gas is introduced from the radially inner side through an introduction pipe 126 to desorption portion 122a of adsorption rotor 120a and concentrated gas is emitted toward the radially outer side through an emission pipe 127.

In concentration apparatus 100a shown in Fig. 2, adsorption rotor 120a rotates at a prescribed speed around the axis in a direction shown with an arrow A in the figure. A unit adsorption unit that has finished adsorption treatment in adsorption portion 121 of adsorption rotor 120a thus moves toward desorption portion 122a and a unit adsorption unit that has finished desorption treatment moves to adsorption portion 121a. Therefore, in concentration apparatus 100a, adsorption treatment and desorption treatment are simultaneously performed and purification treatment can continuously be performed.

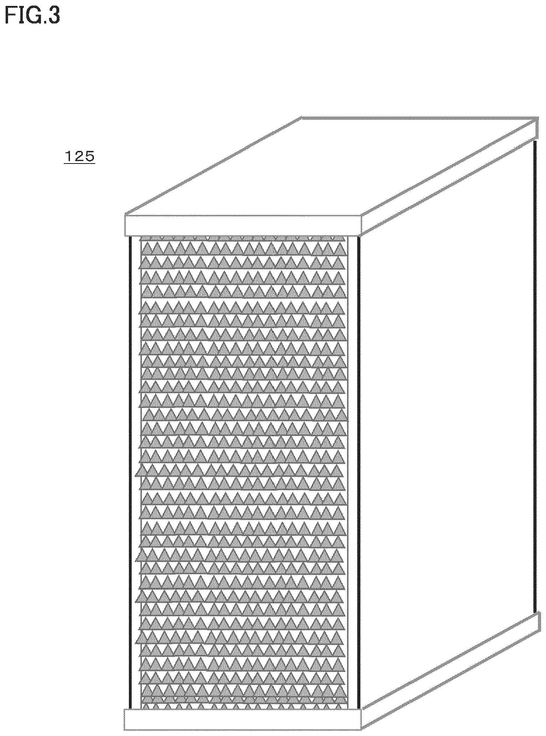

Adsorption unit 125 is, for example, in a form of a block as shown in Fig. 3, and includes an adsorptive material in a form of a honeycomb, a granule, a foam, or a pleated filter. The material for the adsorptive material should only be selected as appropriate as described above. Depending on mechanical strength of the selected adsorptive material, the adsorption material may be reinforced by a casing made of metal, a partition plate, a wire gauze applied to an air passage end surface, and the like.

Each embodiment disclosed herein is illustrative and non-restrictive in every respect. The technical scope of the present invention is delimited by the terms of the claims and is intended to include any modifications within the scope and meaning equivalent to the terms of the claims.

### INDUSTRIAL APPLICABILITY

In treatment of gas to be treated which contains an organic substance with the use of a gas treatment system including a concentration apparatus and a combustion apparatus as being combined, even when variation in concentration of the organic substance is more abrupt than a design value or when a frequency of increase and decrease is high, an amount of energy consumption can be reduced and gas to be treated can be treated more safely in a more stable manner while treatment performance is maintained. Therefore, contribution to industry can be great.

### REFERENCE SIGNS LIST

- 1: gas treatment system
- 100, 100a: concentration apparatus
- 110: gas-to-be-treated supply means
- 120: adsorption rotor
- 121, 121a: adsorption portion
- 122, 122a: desorption portion
- 123: rotational movement means
- 124: frame body
- 125: adsorption unit
- 126: introduction pipe
- 127: emission pipe
- 130: cycle adjustor
- 140: heated gas supply means
- 150: heated gas flow volume control means (gas flow volume control means)
- 160: heated gas temperature control means
- 170: concentrated gas temperature sensor
- 180: heated gas temperature sensor
- 200: combustion apparatus
- 210: concentrated gas supply means
- 220: heat exchanger
- 230: combustion furnace
- 240: combustion means
- 250: heat exchanger
- 260: utility sensor (utility sensing means)
- 270: concentrated gas flow volume control means (gas flow volume control means)
- 280: combustion furnace temperature sensor
- 290: utility supply means

## Claims

1. A gas treatment system that purifies gas to be treated which contains an organic substance, the gas treatment system comprising:
a concentration apparatus that brings introduced gas to be treated in contact with an adsorptive material to adsorb the organic substance and emits resultant gas as purified treated gas and desorbs the organic substance from the adsorptive material with introduced heated gas and emits resultant gas as concentrated gas containing the organic substance;
a combustion apparatus including combustion means, the combustion apparatus having introduced concentrated gas burnt by the combustion means and emitting resultant gas as combustion outlet gas;
utility sensing means that senses an amount of utility used by the combustion means as motive power; and
gas flow volume control means that adjusts a flow volume of heated gas to be introduced to the concentration apparatus and/or a flow volume of concentrated gas to be introduced to the combustion apparatus such that the amount of utility sensed by the utility sensing means is within a setting range.

2. The gas treatment system according to claim 1, wherein
the gas flow volume control means lowers stepwise the flow volume of heated gas and/or the flow volume of concentrated gas when the amount of utility sensed by the utility sensing means exceeds the setting range and instantaneously increases the flow volume of heated gas and/or the flow volume of concentrated gas when the amount of utility becomes lower than the setting range.

3. The gas treatment system according to claim 1 or 2, wherein
the gas flow volume control means compares an average value of amounts of utility sensed by the utility sensing means for a certain period with the setting range of the amount of utility and adjusts the flow volume.

4. The gas treatment system according to claim 1 or 2, wherein
the adsorptive material makes up an adsorption rotor which is divided into an adsorption portion where adsorption is performed and a concentration portion where desorption is performed, and the adsorptive material repeats transition between the adsorption portion and the concentration portion by rotating, and
the gas treatment system further comprises:
concentrated gas temperature sensing means that senses a temperature of concentrated gas emitted from the concentration apparatus; and
rotation speed control means that adjusts a rotation speed of the adsorption rotor such that the temperature sensed by the concentrated gas temperature sensing means is within a setting range.

5. The gas treatment system according to claim 4, wherein
the rotation speed control means lowers stepwise the rotation speed of the adsorption rotor when the temperature sensed by the concentrated gas temperature sensing means becomes lower than the setting range and increases stepwise the rotation speed of the adsorption rotor when the temperature of concentrated gas exceeds the setting range.

6. The gas treatment system according to claim 4, wherein
the rotation speed control means compares an average value of temperatures of concentrated gas sensed by the concentrated gas temperature sensing means for a certain period with the setting range of the temperature of concentrated gas and adjusts the rotation speed.

7. A gas treatment method comprising:
adsorption treatment to adsorb an organic substance contained in gas to be treated with an adsorptive material and emit treated gas;
desorption treatment to desorb the organic substance from the adsorptive material with heated gas and emit resultant gas as concentrated gas; and
combustion treatment to burn concentrated gas, wherein
an amount of utility used in the combustion treatment is sensed and a flow volume of heated gas to be used for the desorption treatment and/or a flow volume of concentrated gas to be supplied for the combustion treatment are adjusted such that the sensed amount of utility is within a setting range.
